# FASCICULE DE BREVET EUROPEEN

(11) **EP 1 867 913 B1**
(45) Date de publication et mention de la délivrance du brevet: **31.03.2010**
(21) Numéro de dépôt: 07290730.6
(22) Date de dépôt: 12.06.2007
(51) Int. Cl.: F21S 8/10, F21S 8/12

(54) **Dispositif d'éclairage ou de signalisation à guide optique pour véhicule automobile**
Vorrichtung zur Beleuchtung oder Signalisierung mittels Lichtwellenleiter für Kraftfahrzeuge
Lighting or signalling device with an optical guide for an automobile vehicle

(30) Priorité: 15.06.2006 FR 0605361
(43) Date de publication de la demande: 19.12.2007
(73) Titulaire: VALEO VISION, 93012 Bobigny Cedex (FR)
(72) Inventeur: Gomez Ruiz, Carlos, 23600 Martos (ES)
(74) Mandataire: Renous Chan, Véronique

(56) Documents cités:
- EP-A2- 0 940 625
- WO-A-2006/128422
- FR-A- 2 833 688
- FR-A3- 2 828 267

## Description

La présente invention a pour objet un dispositif d'éclairage ou de signalisation, de véhicule automobile, comportant au moins un guide optique apte à produire une diffusion de la lumière sur au moins une partie de sa longueur. L'invention concerne aussi un véhicule comportant un tel dispositif d'éclairage ou de signalisation.

Dans le domaine de l'éclairage et de la signalisation de véhicules automobiles, il est de plus en plus fréquent d'utiliser des guides optiques. Un guide optique est, très schématiquement, un élément allongé de matière transparente, généralement de section de type cylindrique ou analogue. A proximité de l'une des extrémités du guide, appelée face d'entrée du guide, est disposée une (ou plusieurs) sources lumineuse, par exemple une source lumineuse de petite taille du type diode électroluminescente : les rayons lumineux émis par cette source se propagent par réflexion totale dans la longueur du guide en direction de son extrémité opposée, appelée face terminale du guide. Une partie des rayons lumineux se propageant dans le guide va en sortir par la face dite face avant du guide grâce à la présence d'éléments réfléchissants disposés sur la face dite face arrière du guide, opposée à la précédente. Ces éléments réfléchissants sont constitués par exemple de prismes. Le guide émet ainsi de la lumière sur toute sa longueur. Il présente l'avantage de pouvoir prendre des formes géométriques très variées, être rectiligne ou courbe, et amener une surface éclairante même dans des zones peu accessibles du projecteur ou du feu du véhicule. Il participe ainsi fortement au style du projecteur ou du feu.

Ces guides doivent répondre à de nombreuses exigences :

Ils doivent apporter de la lumière dans des zones éventuellement peu accessibles du feu ou du projecteur du véhicule, ce qui contraint parfois à concevoir des systèmes d'amenée de lumière à l'entrée du guide, la source de lumière, elle, étant déportée et éloignée du guide.

Ces guides adoptent souvent des formes compliquées, avec des coudes par exemple, ce qui conduit souvent à des fuites de lumière non voulues au niveau de ces coudes, donc à un plus faible pouvoir d'éclairement du guide en aval du coude (« amont » et « aval » se comprenant en fonction de la direction générale de propagation de la lumière dans le guide).

La zone de couplage entre la lumière émise par la source de lumière (directement ou par un élément d'amenée de lumière comme un fibre optique) et le guide est également délicate à concevoir, car il faut éviter que de la lumière, mal dirigée, fuit de manière intempestive hors du guide ou ne parvienne pas à y rentrer complètement. Ce problème se rencontre notamment dans les guides à contour fermé ou quasiment fermé, où il arrive d'observer, quand le guide est allumé, un point lumineux d'intensité élevé émis par la zone de couplage (point lumineux appelé aussi point chaud ou « hot spot » en anglais), ce qui diminue le rendement lumineux du guide sur toute sa longueur, et donne au guide un aspect inhomogène inesthétique.

Il est par exemple connu de la demande de certificat d'utilité FR 2 828 267 un guide de lumière de type annulaire : le flux lumineux entrant dans le guide se divise en deux et part en directions opposées dans le guide annulaire à l'aide d'un élément d'injection amenant la lumière perpendiculairement au plan de l'anneau. Cet élément d'injection est associée à une surface d'injection comprenant deux surfaces déviant la lumière, de façon à ce qu'elle soit réfléchie vers le guide pour s'y propager. Ce système d'injection de lumière est perfectible, car il engendre toujours des fuites de lumière : le guide présente encore au niveau de cette surface d'injection point chaud ou « hot spot » néfaste à l'esthétique du guide.

L'invention a alors pour but d'améliorer la conception des guides de lumière. L'invention cherche notamment à améliorer le rendement lumineux des guides en limitant les fuites de lumière non voulues, et/ou à améliorer l'homogénéité d'aspect des guides à l'état allumé, notamment en évitant la formation de « points chauds » comme explicités précédemment.

L'invention a tout d'abord pour objet un dispositif d'éclairage et/ou de signalisation, notamment pour véhicule automobile, comportant au moins une source lumineuse émettant des rayons lumineux et au moins un guide optique dans lequel se propagent les rayons lumineux, ledit guide présentant
- à au moins une de ses extrémités une face d'entrée assurant le couplage entre ledit guide optique et ladite source lumineuse,
- une première surface formant une face de sortie d'un faisceau lumineux, et
- une seconde surface, notamment opposée à la face de sortie, formant une face de réflexion des rayons lumineux,
tel que le guide présente au moins un coude, le guide au niveau dudit coude présentant au moins un coin saillant vers l'extérieur du coude et biseauté en présentant deux facettes afin de renvoyer les rayons incidents dans le guide.

Le document FR 2 833 688 montre un guide dont le coude est courbe.

On comprend par coude dans le cadre de l'invention un changement dans la direction générale du guide, sans se limiter à un coude à 90° spécifiquement.

Avantageusement, le coin saillant est conçu de façon à provoquer deux réflexions successivement sur l'une puis l'autre des facettes dans des conditions de réflexion totale des rayons lumineux incidents.

Cette configuration est très avantageuse : il était connu de faire dévier des rayons dans un guide à l'aide d'une surface inclinée sur la partie extérieure du coude de façon appropriée pour que les rayons incidents s'y réfléchissent par réflexion totale et soient renvoyés dans le guide. Mais on perd une quantité significative de lumière avec ce type de coude à réflexion « simple », car une partie de la lumière arrive sur cette surface inclinée avec un angle d'incidence inférieur à celui permettant une réflexion totale : la lumière, au lieu d'être renvoyée, poursuit son chemin en traversant la surface inclinée. L'invention propose au contraire un coude avec deux surfaces inclinées en regard l'une de l'autre, de façon à provoquer une double réflexion totale : les rayons incidents atteignent la première facette, puis sont renvoyés vers la seconde, qui les renvoient dans la partie « avale » du guide au-delà du coude. Dans cette configuration, les rayons incidents se trouvent toujours, ou pour l'essentiel, dans les conditions angulaires de la réflexion totale, et les fuites de lumière sont réduites au minimum ou même entièrement supprimées.

Selon un premier mode de réalisation, le coude ne se trouve pas à proximité de la face d'entrée du guide. Sa présence est requise, par exemple pour des raisons esthétiques, techniques, ou pour des considérations d'encombrement dans le feu ou le projecteur.

Selon un second mode de réalisation, le coude se situe à proximité de la face d'entrée ou d'au moins une des faces d'entrée du guide optique. Sa présence est généralement nécessitée par un point d'injection de lumière sous forme d'un embout, placé par exemple de façon oblique ou perpendiculaire au plan du guide lui-même : le coude permet de faire dévier la lumière de la direction générale qu'elle a prise dans l'embout vers la direction générale de propagation qu'elle doit avoir dans le guide qu'elle alimente.

Selon un exemple, le guide présente un contour presque fermé, avec deux faces d'entrée (sur chacune de ses extrémités) disposées à proximité l'une de l'autre.

Selon un autre exemple, -le guide présente un contour entièrement fermé, avec une seule face d'entrée. Dans ce cas, la face d'entrée est de préférence sur un embout d'amenée de lumière, de façon à ce que les rayons lumineux se propageant dans l'embout soient ensuite partagés au niveau de la zone de raccordement du guide avec l'embout en deux flux partant dans le guide dans des directions différentes. On peut alors avoir deux coudes au niveau de la zone de raccordement du guide avec l'embout, les coudes étant jointifs et leurs coins saillants s'intersectant partiellement.

Comme déjà mentionné plus haut, la face d'entrée ou chacune des faces d'entrée du guide peut être sur un embout d'amenée de lumière, qui a pour seule fonction de conduire la lumière vers le guide. Selon l'un ou l'autre exemple, notamment, le coude muni du coin saillant peut être disposé dans la zone de raccordement du guide avec l'embout.

Avantageusement, le ou les embout(s) font partie intégrante du guide optique : on peut mouler l'ensemble d'une seule pièce, en matériau polymère transparent de préférence, bien que le matériau verre soit possible également. L'invention concerne aussi tout véhicule automobile intégrant un tel guide de lumière.

L'invention sera décrite en détails à l'aide de plusieurs exemples de réalisation non limitatifs et illustrés par les figures suivantes :
Les figures 1a et 1b représentent deux vues d'un premier exemple de guide optique et de ses amenées de lumière selon l'invention.
Les figures 2a, 2b représentent des vues détaillées du premier exemple de guide de lumière selon la figure 1 au niveau des points d'injection de lumière dans le guide.
Les figures 3a, 3b représentent des vues détaillées d'un second exemple de guide de lumière au niveau de son point d'injection de lumière dans le guide.
Les figures 4a,4b comparent le cheminement des rayons lumineux dans un guide de lumière avec un coude selon l'invention (figure 4b) et selon l'art antérieur (4a).
Les figures 5a,5b représentent des tableaux de données relatifs aux performances optiques des guides coudés selon les figures 4a,4b.
La figure 6 représente une vue détaillée d'une zone d'injection de lumière dans un guide optique selon l'art antérieur.

Toutes ces figures sont très schématiques et ne respectent pas nécessairement l'échelle pour en faciliter la lecture.

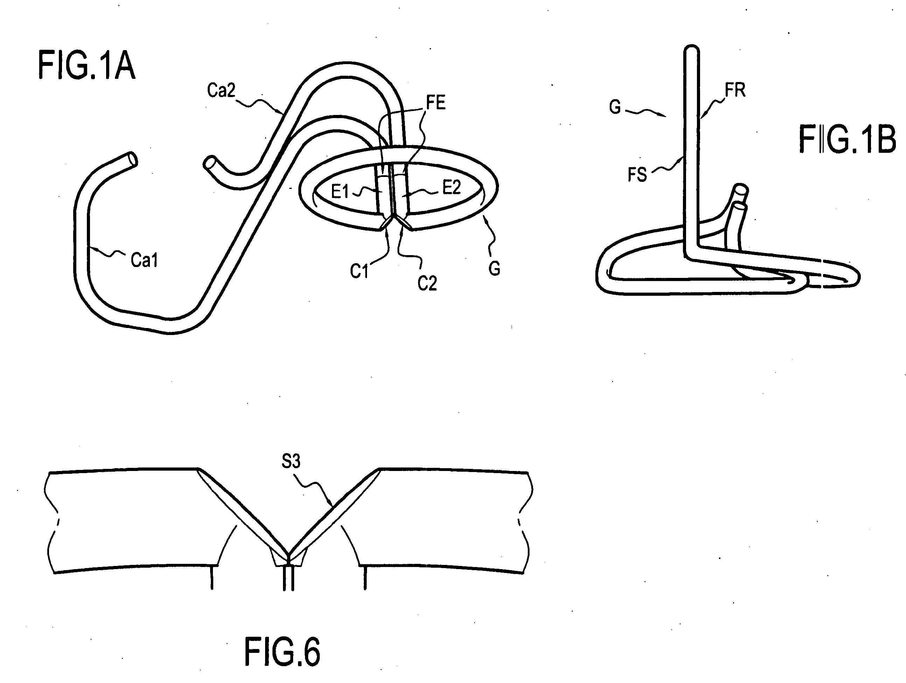

Les figures 1a, 1b montrent un premier exemple de guide optique G vu de profil (figure 1b) et vu en perspective (figure 1a). Ce guide a une forme globalement annulaire, forme qui permet de le disposer autour d'un module optique de type module code ou route d'un projecteur de véhicule. Ce guide peut remplir des fonctions de signalisation, comme une fonction de feu de position ou de feu diurne. Ici le guide a une face arrière dite de réflexion FR munie de prismes, de façon connue, et une face avant dite face de sortie FS qui est de forme globalement cylindrique ou torique. Les rayons se propagent dans le guide, avec réflexion totale sur les prismes de la face de réflexion, sortent sur tout le pourtour du guide défini par la face de sortie pour fournir l'éclairement voulu. La section du guide est ici, à titre d'exemple, circulaire. Le guide a deux points d'injection de lumière, sous forme de deux embouts (E1,E2) dont l'extrémité définit une face d'entrée de la lumière (FE). Ces embouts débouchent dans les canaux (Ca1,Ca2). Ces canaux sont, dans cet exemple, des conduits optiques, de préférence venus de matière avec le guide de lumière (donc plutôt en matériau polymère). Ils peuvent aussi être des guides optiques en verre plein. Il peut aussi s'agir de fibres optiques. qui convoient la lumière provenant d'une ou plusieurs sources lumineuses symbolisées aux figures par la lettre S (des sources de type lampe halogène ou diode électroluminescente par exemple). Ces embouts font en fait partie intégrante du guide G : ils sont moulés d'une pièce par exemple en polycarbonate (d'autres polymères sont également appropriés, comme le polymétacrylate de méthyle). Deux coudes C1, C2 sont prévus, pour que les faisceaux lumineux arrivant par les embouts E1, E2 sensiblement perpendiculairement ou obliquement au plan médian du guide P soient déviés respectivement d'un côté et du côté opposé du guide.

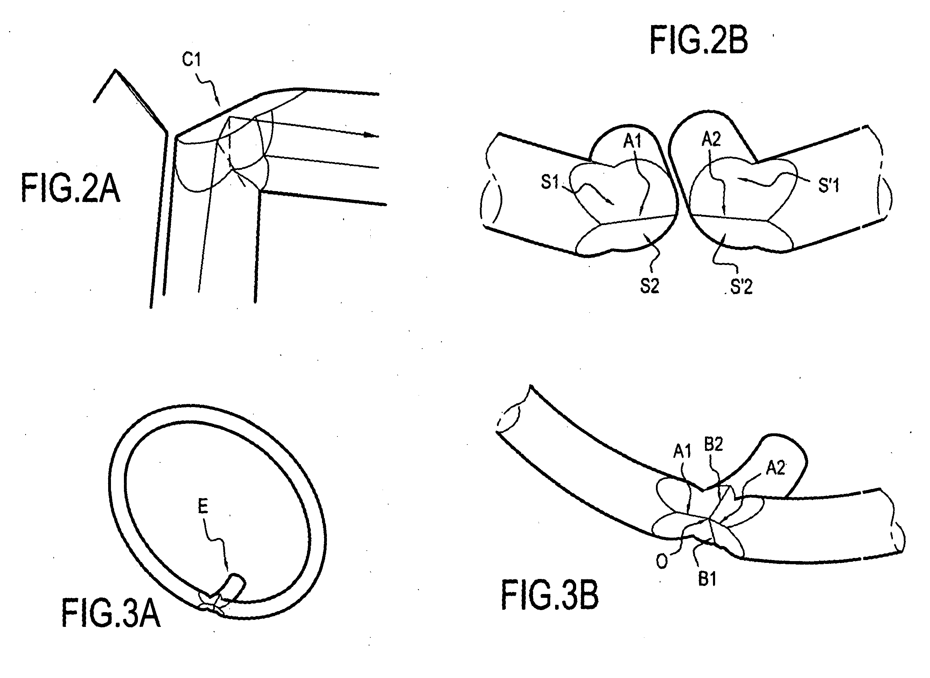

Les figures 2a et 2b donnent deux vues détaillées des figures 1a,1b selon deux perspectives différentes de la zone de raccordement entre les embouts (qui conduisent de la lumière sans la réémettre) et le guide (qui conduit la lumière et qui la diffuse progressivement sur toute sa longueur pour assumer sa fonction de signalisation) : on a ici, selon l'invention, un coude à approximativement 90° présentant un coin saillant biseauté avec deux facettes S1,S2 définissant une arête commune A1,A2. On peut noter la différence de configuration de cet exemple avec la figure 6, qui représente l'art antérieur pour le même type de guide optique, avec au niveau du coude, un unique pan incliné S3.

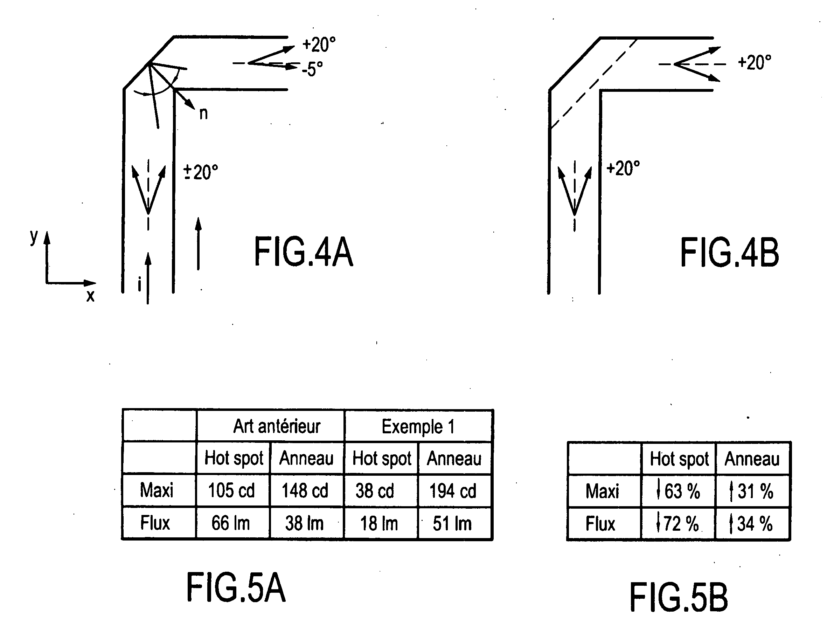

Comme illustré aux figures 4a et 4b, la différence de l'invention change considérablement le cheminement des rayons au niveau du coude :
- selon l'art antérieur illustré à la figure 6 et à la figure 4a, les rayons qui atteignent le pan incliné S3 ont une ouverture angulaire donnée dans un référentiel (x,y,z). Le vecteur n de la normal au plan incliné S3 a comme coordonnées (1/√2,-1/√2,0). Pour un rayon incident du mode à 0°, de coordonnées (0,1,0), on a un angle d'incidence α de 45°. Or cette valeur est proche de l'angle de réflexion totale pour la matière polymère utilisée pour faire ie guide, qui est d'environ 40°. La conséquence est que, pour tout rayon incident arrivant sur la surface S3 avec un angle moindre, il y aura une composante du rayon qui ne sera pas réfléchie mais qui va sortir du guide, créant un « hot spot » et diminuant le rendement lumineux dans le reste du guide.

Dans le système selon l'invention, comme illustré aux figures 2a, 2b et à la figure 4b, la situation est différente : le vecteur normal à la première facette S1 a comme coordonnées (1/2,-1/2,±√2/2). L'angle d'incidence du mode à 0° des rayons sur cette facette est alors de 60°, une valeur nettement éloignée de l'angle de 40° mentionné plus haut. Ces rayons, après cette première réflexion sur S1, atteignent la seconde facette S2 avec un angle d'incidence de 60° à nouveau. Là encore, la réflexion est totale, sans fuite de lumière, et les rayons sont renvoyés dans le guide avec une direction finale selon les coordonnées (1,0,0).

La figure 5a représente dans son tableau, pour l'exemple selon l'invention : « exemple 1 », et pour l'art antérieur des figures « art antérieur » :
- le maximum de lumière mesuré, en candelas (cd),
- le flux lumineux mesuré, en lumens, au niveau du coude
Les mesures sont faites au niveau du coude (« hot spot ») et à un endroit du guide éloigné du coude sur sa face de sortie (« anneau »).

La figure 5b représente un tableau tiré du tableau précédent, afin de calculer les différences de maximum et de flux de lumière entre l'exemple de l'invention et l'art antérieur : l'invention permet donc de diminuer de 72% la perte de lumière sortant par le « hot spot », et d'augmenter en parallèle ce flux lumineux émis par le reste du guide de 34 % : On voit que l'invention permet de quasiment faire disparaître l'impression de hot spot, et , en outre, le guide éclaire mieux et plus fort en dehors de son ou ses points d'injection.

Un autre avantage que l'exemple 1 a par rapport à l'art antérieur est que, au voisinage du « hot spot », le guide, à l'état allumé, offre un aspect plus homogène que dans l'art antérieur.

Un exemple 2 selon l'invention fait l'objet des figures 3a et 3b : c'est une variante de l'exemple 1. La différence d'avec l'exemple 1 est qu'ici, ii s'agit cette fois d'un guide de forme annulaire à contour fermé. Il n'y a qu'un embout unique E. On retrouve les deux coins saillants biseautés, mais qui s'intersectent ici. On a ainsi des arêtes A1 et A2 de chacun des coins saillants (S1,S2) et (S1',S2'), comme précédemment. On aussi des arêtes B1, B2 délimitant l'intersection des deux coins : B1 entre les deux premières facettes (S1,S'1) et B2 entre les deux secondes facettes (S2, S'2). Toutes ces arêtes se rejoignent au niveau d'un point d'intersection 0. Il ne sera pas décrit à nouveau pour cet exemple le cheminement des rayons, sachant que ceux-ci vont subir de façon analogue une double réflexion totale.

Il est bien entendu que le guide optique selon l'invention peut avoir d'autres formes comme, par exemple, comporter des courbures, une ou plusieurs portions d'arc de cercle etc. L'invention s'applique à tout guide courbe ou rectiligne, fermé ou ouvert, mutadis mutandi, et à tout coude dans le guide, qu'il soit proche d'une de ses extrémités, proches de son point d'injection de lumière, ou pas.

Dans les exemples précédents, le guide optique G a une section circulaire ; il est bien entendu qu'il peut aussi, dans d'autres modes de réalisation, avoir une section elliptique, carrée, ovale, voire plus complexe, et il est à base de polymère transparent en polycarbonate (ou polymétacrylate de méthyle PMMA, ou autre polymère approprié), de préférence de qualité cristal.

## Revendications

1. Dispositif d'éclairage et/ou de signalisation de véhicule automobile, comportant au moins une source lumineuse (S) émettant des rayons lumineux et au moins un guide optique (G) dans lequel se propagent les rayons,
ledit guide présentant
- à au moins une de ses extrémités une face d'entrée (FE) assurant le couplage entre ledit guide optique (G) et ladite source lumineuse,
- une première surface formant une face de sortie (FS) d'un faisceau lumineux, et.
- une seconde surface, notamment opposée à la face de sortie, formant une face de réflexion (FR) des rayons lumineux,
le guide présentant au moins un coude **caractérisé en ce que** le guide au niveau dudit coude présente au moins un coin saillant (C) vers l'extérieur du coude et biseauté en présentant deux facettes (S1,S2) afin de renvoyer les rayons incidents dans le guide.

2. Dispositif selon la revendication précédente, **caractérisé en ce que** le coin saillant (C) est conçu de façon à provoquer deux réflexions successivement sur l'une puis l'autre des facettes (S1,S2) dans des conditions de réflexion totale des rayons lumineux incidents.

3. Dispositif selon l'une des revendications précédents, **caractérisé en ce que** le coude se situe à proximité de la face d'entrée ou d'au moins une des faces d'entrée (FE) du guide optique.

4. Dispositif selon l'une des revendications précédentes, **caractérisé en ce que** le guide présente un contour presque fermé, avec les deux faces d'entrée (FE) disposées à proximité l'une de l'autre.

5. Dispositif selon l'une des revendications 1 à 3, **caractérisé en ce que** le guide présente un contour entièrement fermé, avec une seule face d'entrée (FE).

6. Dispositif selon la revendication précédente, **caractérisé en ce que** la face d'entrée (FE) est sur un embout (E ) d'amenée de lumière, de façon à ce que les rayons lumineux se propageant dans l'embout soient ensuite partagés au niveau de la zone de raccordement du guide avec l'embout en deux flux partant dans le guide dans des directions différentes.

7. Dispositif selon la revendication précédente, **caractérisé en ce qu'**il y a deux coudes au niveau de la zone de raccordement du guide avec l'embout, les coudes étant Jointifs et leurs coins saillants s'intersectant partiellement.

8. Dispositif selon l'une des revendications précédentes, **caractérisé en ce que** la face d'entrée ou chacune des faces d'entrée (FE) est sur un embout (E ) d'amenée de lumière.

9. Dispositif selon la revendication précédente, **caractérisé en ce que** le ou les embout(s) (E ) font partie intégrante du guide optique.

10. Dispositif selon la revendication 8 ou 9, **caractérisé en ce que** le coude muni du coin saillant (C) est disposé dans la zone de raccordement du guide avec l'embout (E).

## Claims

1. Lighting and/or signalling device for a motor vehicle, comprising at least one source of light (S) which emits light rays, and at least one optical guide (G) in which the rays are propagated, the said guide having:
- at at least one of its ends, an intake surface (FE) which provides the coupling between the said optical guide (G) and the said source of light;
- a first surface which forms an output surface (FS) of a light beam; and
- a second surface, which in particular is opposite the output surface, and forms a surface (FR) for reflection of the light rays,
the guide having at least one bend, **characterised in that** at the level of the said bend, the guide has at least one corner (C) which projects towards the exterior of the bend, is bevelled, and has two facets (S1, S2) in order to return the rays which are incident in the guide.

2. Device according to the preceding claim, **characterised in that** the projecting corner (C) is designed such as to give rise to two successive reflections on one then on the other of the facets (S1, S2), in conditions of total reflection of the incident light rays.

3. Device according to one of the preceding claims, **characterised in that** the bend is situated in the vicinity of the intake surface, or of at least one of the intake surfaces (FE) of the optical guide.

4. Device according to one of the preceding claims, **characterised in that** the guide has a contour which is almost closed, with the two intake surfaces (FE) disposed in the vicinity of one another.

5. Device according to one of claims 1 to 3, **characterised in that** the guide has a contour which is entirely closed, with a single intake surface (FE).

6. Device according to the preceding claim, **characterised in that** the intake surface (FE) is on a joining piece (E) for intake of light, such that the light rays which are propagated in the joining piece are then shared at the level of the area of connection of the guide to the joining piece, into two flows which go into the guide in different directions.

7. Device according to the preceding claim, **characterised in that** there are two bends at the level of the area of connection of the guide to the joining piece, with the bends being contiguous and their projecting corners intersecting partially.

8. Device according to one of the preceding claims, **characterised in that** the intake surface or each of the intake surfaces (FE) is on a joining piece (E) for intake of light.

9. Device according to the preceding claim, **characterised in that** the joining piece(s) (E) is /are an integral part of the optical guide.

10. Device according to claim 8 or claim 9, **characterised in that** the bend which is provided with the projecting corner (C) is disposed in the area of connection of the guide to the joining piece (E).

## Patentansprüche

1. Kraftfahrzeugbeleuchtungs- und/oder -signalgebungsvorrichtung mit wenigstens einer Lichtstrahlen emittierenden Lichtquelle (S) und wenigstens einem Lichtleiter (G), in dem sich die Lichtstrahlen ausbreiten, wobei der Lichtleiter aufweist:
- an wenigstens einem seiner Enden eine Eintrittsfläche (FE), die die Kopplung zwischen dem Lichtleiter (G) und der Lichtquelle gewährleistet,
- eine erste Fläche, die eine Austrittsfläche (FS) eines Lichtbündels bildet, und
- eine zweite, der Austrittsfläche insbesondere entgegengesetzt angeordnete Fläche, die eine Reflexionsfläche (FR) der Lichtstrahlen bildet,
wobei der Lichtleiter wenigstens eine Biegung aufweist,
**dadurch gekennzeichnet, dass** der Lichtleiter in Höhe der Biegung wenigstens eine zur Außenseite der Biegung vorspringende Ecke (C) aufweist, die unter Bildung zweier schräger Flächen (S1, S2) abgeschrägt ist, um die in den Lichtleiter einfallenden Strahlen zurückzustrahlen.

2. Vorrichtung nach dem vorhergehenden Anspruch,
**dadurch gekennzeichnet, dass** die vorspringende Ecke (C) so ausgebildet ist, dass zwei Reflexionen nacheinander auf die eine und dann auf die andere schräge Fläche (S1, S2) unter Bedingungen der Totalreflexion der einfallenden Lichtstrahlen bewirkt werden.

3. Vorrichtung nach einem der vorhergehenden Ansprüche,
**dadurch gekennzeichnet, dass** die Biegung in der Nähe der Eintrittsfläche oder wenigstens einer der Eintrittsflächen (FE) des Lichtleiters liegt.

4. Vorrichtung nach einem der vorhergehenden Ansprüche,
**dadurch gekennzeichnet, dass** der Lichtleiter einen nahezu geschlossenen Umriss aufweist, wobei die beiden Eintrittsflächen (FE) nahe beieinander angeordnet sind.

5. Vorrichtung nach einem der Ansprüche 1 bis 3,
**dadurch gekennzeichnet, dass** der Lichtleiter einen vollständig geschlossenen Umriss mit nur einer Eintrittsfläche (FE) aufweist.

6. Vorrichtung nach dem vorhergehenden Anspruch,
**dadurch gekennzeichnet, dass** sich die Eintrittsfläche (FE) auf einem Endstück (E) zur Lichtzuleitung befindet, so dass die sich im Endstück ausbreitenden Lichtstrahlen anschließend in Höhe des Bereichs der Verbindung des Lichtleiters mit dem Endstück in zwei Ströme geteilt werden, die sich im Lichtleiter in verschiedenen Richtungen fortpflanzen.

7. Vorrichtung nach dem vorhergehenden Anspruch,
**dadurch gekennzeichnet, dass** zwei Biegungen in Höhe des Bereichs der Verbindung des Lichtleiters mit dem Endstück vorhanden sind, wobei die Biegungen aneinander stoßen und ihre vorspringenden Ecken sich teilweise überschneiden.

8. Vorrichtung nach einem der vorhergehenden Ansprüche,
**dadurch gekennzeichnet, dass** sich die Eintrittsfläche oder jede Eintrittsfläche (FE) auf einem Lichtzuleitungsendstück (E) befindet.

9. Vorrichtung nach dem vorhergehenden Anspruch,
**dadurch gekennzeichnet, dass** das oder die Endstücke (E) integraler Bestandteil des Lichtleiters sind.

10. Vorrichtung nach einem der Ansprüche 8 oder 9,
**dadurch gekennzeichnet, dass** die mit der vorspringenden Ecke versehene Biegung im Bereich der Verbindung des Lichtleiters mit dem Endstück (E) angeordnet ist.
